**Europäisches Patentamt**

**European Patent Office**

**Office européen des brevets**

(11) Veröffentlichungsnummer: **0 161 589**
**B1**

(19)

(12) ## EUROPÄISCHE PATENTSCHRIFT

(45) Veröffentlichungstag der Patentschrift:
27.12.89

(51) Int. Cl.⁴: **B 29 C 45/14**

(21) Anmeldenummer: **85105401.5**

(22) Anmeldetag: **03.05.85**

(54) **Verfahren und Vorrichtung zum Herstellen eines Kunststoff Spritzgussteils, insbesondere Profilleiste für Fahrzeuge.**

(30) Priorität: **17.05.84 DE 3418275**

(43) Veröffentlichungstag der Anmeldung:
**21.11.85 Patentblatt 85/47**

(45) Bekanntmachung des Hinweises auf die Patenterteilung:
**27.12.89 Patentblatt 89/52**

(84) Benannte Vertragsstaaten:
**BE DE FR GB IT SE**

(56) Entgegenhaltungen:
**BE-A-684 948**
**DE-A-3 020 906**
**DE-A-3 041 346**
**DE-A-3 116 339**
**DE-U-6 607 669**

**PATENT ABSTRACTS OF JAPAN, Band 8, Nr. 164**
**(M-313) 1601 , 28. Juli 1984; & JP-A-59 57 730**
**(HASHIMOTO FORMING KOGYO K.K.) 03-04-1984**

(73) Patentinhaber: **Gebr. Happich GmbH, Postfach 10
02 49 Clausenbrücke 1, D-5600 Wuppertal 1 (DE)**

(72) Erfinder: **Irrgang, Manfred, In der Beek 47 a,
D-5600 Wuppertal 1 (DE)**

**Beschreibung**

Die Erfindung bezieht sich auf ein Verfahren zum Herstellen eines Kunststoff-Spritzgußteils, insbesondere Profilleiste für Fahrzeuge, bei dem zumindest auf die Vorderseite eines in das Formnest einer Spritzgußform eingelegten Trägers bereichsweise eine Kunststoff-Spritzgußmasse zwecks Bildung einer Auflage mit hohem Spritzdruck aufgespritzt wird. Weiterhin bezieht sich die Erfindung auf eine Vorrichtung zum Durchführen des Verfahrens, bestehend aus einer Kunststoff-Spritzgußmaschine mit einer Spritzgußform, zwischen deren Formhälften der Träger einspannbar ist und deren die Vorderseite des Trägers abstützende Formhälfte zumindest eine ein Formnest für die Auflage bildende Ausnehmung aufweist. Ein derartiger Verfahren bzw. eine derartige Vorrichtung ist interner Stand der Technik.

Von Kunststoff-Spritzgußteilen, insbesondere Profilleisten für Fahrzeuge, wird oftmals gefordert, daß der Träger auflagefreie Bereiche aufweist und daß diese auflagefreien Bereiche randsauber ausgebildet sind. Wird als Träger ein gegebenenfalls vorgeformtes Edelstahl band eingesetzt, wie es bei Profilleisten für Fahrzeuge häufig der Fall ist, so dient, ein auflagefreier Bereich hier ausschließlich dazu, die Profilleiste dekorativ wirksam zu gestalten. Bei Profilleisten sind es in der Regel auflagefreie Längsstreifen, die sich nahezu über die gesamte Profilleistenlänge erstrecken, die über ihre gesamte Länge eine gleichbleibende Breite aufweisen und die als "Blankbereiche" bezeichnet werden. Die Herstellung derartiger Profilleisten bereitet in der Praxis erhebliche Schwierigkeiten, und zwar in bezug auf die saubere geradlinige Ausbildung der die Blankbereiche begrenzenden Randkanten der Auflagen. Die Schwierigkeiten liegen dar in begründet, daß zunächst die Dichtfunktion zwischen den Randkanten des Formnestes und den daran angrenzenden Stützflächen der entsprechenden Formhälfte des Spritzwerkzeuges ausschließlich durch den Träger, der durch den Schließdruck der Spritzgußform gegen die Auflageflächen der Formhälften gepreßt wird, erfüllt werden muß. Weiterhin liegen die Schwierigkeiten darin begründet, daß die Blankbereiche in der Regel an gewölbten oder sonstwie gekrümmten Profilleistenbereichen vorgesehen werden, also in solchen Bereichen, in denen sich Toleranzabweichungen in der Praxis kaum vermeiden lassen. Hinzu kommt, daß bei Profilleisten die Spritzgußmasse zwecks Vermeidung von sichtbaren Angußstellen von einem Leistenende her in die Spritzgußform eingespritzt wird, was aber wiederum zur Folge hat, daß ein sehr hoher Spritzdruck, der je nach Leistenlänge und Leistenquerschnitt, über 1 000 bar betragen kann, erforderlich ist. Wird nun nach herkömmlicher Herstellungsart ein Träger in die untere Formhälfte eingelegt, die Spritzgußform geschlossen und in das Formnest der oberen Formhälfte Kunststoff-Spritzgußmasse mit hohem Druck eingespritzt, so kommt es zur erhöhten Anpressung des Trägers gegen die Auflagefläche der unteren Formhälfte und schon bei geringsten Toleranzabweichungen zur Verformung des Trägers und zur Spaltbildung zwischen der Oberseite des Trägers und der dieser benachbarten Auflagefläche der oberen Formhälfte, und zwar in den Randkantenbereichen des Formnestes. Da aber die Spritzgußmasse bestrebt ist, auch kleinste Spalte auszufüllen, zeigt sich nach der Entformung des Spritzgußteils oftmals ein mehr oder weniger unsauberer Verlauf der Randkantenbereiche des Blankbereichs. Da unsaubere Randkanten im Blankbereich der Profilleisten aber im höchsten Maße unerwünscht sind, müssen kostenintensive Nachbearbeitungsmaßnahmen vorgenommen werden, wobei es dann allerdings oftmals noch zu einer Oberflächenbeschädigung (Kratzer) des Blankbereichs kommt.

Der Erfindung liegt nun die Aufgabe zugrunde ein Verfahren aufzuzeigen, durch welches sichergestellt werden soll, daß die Randkanten zwischen der Trägerauflage und den auflagefreien Bereichen absolut sauber und damit nachbearbeitungsfrei herstellbar sind. Weiterhin ist es Aufgabe der Erfindung eine Vorrichtung zum Durchführen des Verfahrens zu schaffen.

Das zur Lösung der vorstehend umrissenen Aufgabe vorgesehene Verfahren zeichnet sich erfindungsgemäß dadurch aus, daß beim Aufspritzen der Auflage auf die Vorderseite des Trägers der auflagefreie Trägerbereich von der Trägerrückseite her mittels eines Druckmediums gegenbeaufschlagt wird.

Die Erfindung macht sich die Erkenntnis zunutze, daß die Herstellung von toleranzfehlerfreien Trägern für Massenartikel, wie es Kunststoff-Spritzußteile in allgemeinen und Profilleisten im besonderen nun einmal sind, nicht, zumindest nicht kostenmäßig vertretbar realisierbar ist, daß solche Maßabweichungen aber unerheblich sind, wenn sie in Bereichen auftreten, die ohnehin mit einer Auflage versehen werden. Die Erfindung nimmt also Toleranzabweichungen, zumindest soweit sie den Träger betreffen, in Kauf und gleicht sie durch entsprechende Anpressung des Trägers gegen die Auflagefläche der das Formnest für die Auflage aufweisenden Formhälfte mittels eines geeigneten Druckmediums aus. Durch die auf die Rückseite des Trägers wirkende Druckmediumbeaufschlagung vermag nun der Träger seine Dichtfunktion voll zu erfüllen; denn eine mögliche Spaltbildung zwischen dem Träger und den Auflageflächen der Formhälften tritt nunmehr an der Trägerrückseite, wo sie allerdings unschädlich ist, auf, und zwar insbesondere dann, wenn, wie nach einem weiteren Verfahrensschritt der Erfindung vorgesehen ist, die Trägerrückseite gegenüber dem auf die Vorderseite wirkenden Spritzdruck mit Voreilung durch ein Druckmedium beaufschlagt wird.

Bevorzugterweise wird die Trägerrückseite mit einem Druck beaufschlagt, dessen Größe zumindest dem auf die Vorderseite wirkenden Spritzdruck entspricht. Damit wird praktisch ausgeschlossen, daß sich zwischen der Vorderseite des Trägers und der dieser benachbarten Form-

hälfte eine Spaltbildung ergeben kann.

Ein besonders bevorzugter Verfahrensschritt besteht in weiterer Ausgestaltung der Erfindung darin, daß die für die Bildung der Auflage dienende Kunststoff-Spritzgußmasse auch als Gegendruckmedium verwendet wird. Damit ergibt sich die Möglichkeit, mit ein und derselben Maschine und mit nur einem Spritzkopf auch die Trägerrückseite mit einem Druckmedium zu beaufschlagen.

Vorteilhafterweise wird ein Träger verwendet, der ausschließlich in dem mit der Auflage zu versehenen Bereich eine Haftvermittlerbeschichtung aufweist. Damit wird einerseits eine innige Haftung der Auflage am Träger sichergestellt, jedoch andererseits ermöglicht, die an der Trägerrückseite sitzende Auflage nach der Entformung des Spritzgußteils wieder vom Träger abzuziehen und einer Weiterverarbeitung zuzuführen.

Die zur Durchführung des Verfahrens vorgesehene Vorrichtung zeichnet sich erfindungsgemäß dadurch aus, daß auch die die Trägerrückseite abstützende Formhälfte im Trägerauflagebereich mindestens eine mit einem Druckmedium beschickbare Ausnehmung aufweist, die seitlich an die Ausnehmung in der anderen Formhälfte angrenzt.

Die zusätzliche, erfindungsgemäß vorgesehene Ausnehmung ermöglicht es, den Träger von der Rückseite her mit einem Druckmedium zu beaufschlagen und damit unter Erzeugung einer zuverlässigen Dichtwirkung an die Auflagefläche der oberen Formhälfte anzupressen. Dabei ist es wichtig, daß die zusätzliche Ausnehmung seitlich neben der das Formnest bildenden Ausnehmung in der anderen Formhälfte angeordnet ist, weil es anderenfalls dazu kommen könnte, daß der Träger eine in das Formnest hinein gerichtete Verformung erleidet.

Bei der erfindungsgemäßen Vorrichtung kann weiterhin vorgesehen sein daß die Ausnehmung in der die Trägerrückseite abstützenden Formhälfte einen geringfügig größeren Öffnungsquerschnitt als die das Formnest für die Auflage bildende Ausnehmung aufweist, wodurch eine gewisse Voreilung des Druckmediums an der Trägerrückseite erzielt wird.

Die erfindungsgemäße Vorrichtung ist weiterhin dadurch ausgestaltet, daß die in den Formhälften eingearbeiteten Ausnehmungen in zueinander versetzter Anordnung in Längsrichtung der Spritzgußform parallel zueinander verlaufen. Dabei kann weiterhin vorgesehen sein, daß die Ausnehmungen in den einandergegenüberliegenden Formhälften mit jeweils einer Randkante unmittelbar aneinander angrenzen oder sich geringfügig überschneiden.

Die Erfindung wird nachfolgend anhand der Zeichnung näher erläutert. Es zeigen:

Fig. 1   die Draufsicht auf ein als Profilleiste ausgebildetes Kunststoff-Spritzgußteil,

Fig. 2   einen Schnitt 11 - 11 nach Fig. 1 Fig. 3   einen Vertikalschnitt durch eine Spritzgußform zum Herstellen der Profilleiste nach Fig. 1 und 2 in herkömmlicher Bauart,

Fig. 4   einen Vertikalschnitt durch eine erfindungsgemäße Spritzgußform zum Herstellen der Profilleiste nach Fig. 1 und 2,

Fig. 5   einen Vertikalschnitt durch eine gegenüber der nach Fig. 4 abgewandelten Ausführungsform einer erfindungsgemäßen Spritzgußform und

Fig. 6   ein weiteres Ausführungsbeispiel einer erfindungsgemäßen Spritzgußform im Vertikalschnitt.

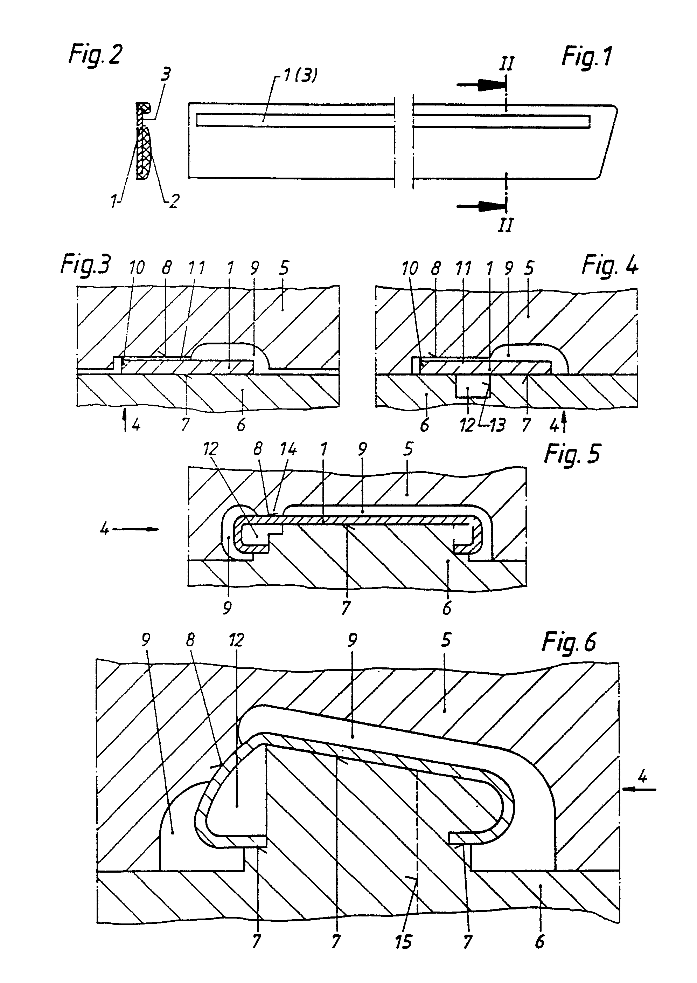

Das in Fig. 1 und 2 dargestellte Kunststoff-Spritzgußteil ist als Profilleiste für Fahrzeuge ausgebildet und besteht aus einem Träger 1 mit einer darauf unlösbar angeordneten Auflage 2. Der Träger 1 besteht aus einem formstabilen Material, bei spielsweise rostfreien Edelstahl, während die Auflage 2 aus einem spritzgußgeeigneten Kunststoff, zweckmäßigerweise PVC, gebildet ist. Wie die Fig. 1 und 2 weiterhin erkennen lassen, weist der Träger 1 einen auflagefreien Bereich 3 auf, der im allgemeinen als Blankbereich bezeichnet wird und der sich (vgl. Fig. 1) als Längsstreifen nahezu über die gesamte Länge der Profilleiste erstreckt. Die Herstellung von Profilleisten im Spritzgußverfahren bietet den Vorteil, daß die nachträgliche Anbringung von geschlossenen Leistenenden nicht mehr erforderlich ist, da die Leisten in einem Arbeitsgang fertiggestellt werden können.

In Fig. 3 ist eine herkömmliche Spritzgußform 4 zur Herstellung einer gegenüber der nach Fig. 1 und 2 abgewandelten Profilleiste dargestellt, die aus einer oberen Formhälfte 5 und einer unteren Formhälfte 6 besteht. Die Formhälften 5 und 6 weisen Auflageflächen 7 und 8 für den Träger 1 und die obere Formhälfte 5 zusätzlich eine ein Formnest 9 bildende Ausnehmung auf. In das Formnest 9 wird zwecks Bildung einer Auflage 2 eine Kunststoff-Spritzgußmasse mit hohem Druck eingespritzt. Verläuft nun die Vorderseite des Trägers 1 nicht exakt parallel zur Trägerrückseite, so kann dies dazu führen, daß die Auflagefläche 8, trotz eines hohen Schließdrucks der Formhälften 5 und 6, nicht zu einer planparallelen Anlage an der Oberfläche des Trägers 1 gelangt. Im Ausführungsbeispiel ist eine Toleranzabweichung durch einen etwas übertrieben dargestellten Grat 10 angedeutet und gezeigt, daß durch eine soche Toleranzabweichung zwischen der Auflagefläche 8 und der Oberseite des Trägers 1 ein Spalt 11 entstehen kann. Beim Einspritzen einer Kunststoff-Spritzgußmasse in das Formnest 9 dringt zwangsläufig Spritzgußmasse auch in den Spalt 11 ein, was aber im höchsten Grade unerwünscht ist, weil hier ein auflagefreier Blankbereich 3 gefordert wird. Somit muß nach dem Entformen der Profilleiste der überschüssige Auflagebereich unter Zuhilfenahme von Schneidwerkzeugen wieder entformt werden, was nicht nur zeit- und arbeitsintensiv ist, sondern darüber hinaus auch zur Beschädigung der Trägeroberfläche führen kann.

In Fig. 4 ist nun eine Spritzgußform 4 gezeigt, die weitgehend der nach Fig. 3 entspricht und in bezug auf übereinstimmende Teile mit den gleichen Bezugzeichen versehen ist. Der entscheidende Unterschied der Spritzgußform 4 gegenüber der nach Fig. 3 besteht darin, daß in der unteren Formhälfte 6 der ersteren eine die Auflagefläche 7 unterbrechende Ausnehmung 12 eingearbeitet ist. Diese Ausnehmumg 12 schließt mit einem Längsrand 13 mit dem an den Blankbereich des Trägers 1 angrenzenden Längsrand des Formnestes 9 ab, daß heißt, die Ausnehmung 12 grenzt rechts und das Formnest 9 grenzt links an eine gedachte senkrechte Verbindungslinie an. Die Ausnehmung 12 verläuft parallel zum Formnest 9, erstreckt sich über die Länge der Spritzgußform 4 und dient dazu, an der Rückseite des Trägers 1 mittels eines Druckmediums einen Druck aufzubauen, der die Rückseite des Trägers derart beaufschlagt, daß dessen Vorderseite gegen die Auflagefläche 8 der oberen Formhälfte 5 gepreßt wird. Auf diese Weise läßt sich die Bildung eines Spaltes 11 und damit ein Austritt der Spritzgußmasse aus dem Formnest 9 mit Sicherheit verhindern. Wie Versuche gezeigt haben, eignet sich als Druckmedium dieselbe Spritzgußmasse, die auch zur Bildung der Auflage 2 verwendet wird.

Die gegenüber der nach Fig. 4 leicht abgewandelte Spritzgußform 4 nach Fig. 5 weist ebenfalls eine obere Formhälfte 5 und eine untere Formhälfte 6 sowie ein unterteiltes Formnest 9 für die Bildung einer Auflage 2 für einen, hier im Querschnitt C-förmigen Träger 1 auf. Der das Formnest 9 unterbrechende Vorsprung 14 der Formhälfte 5 bildet den auflagefrei zu haltenden Blankbereich der Profilleiste. Damit dieser Blankbereich einwandfrei randsauber hergestellt werden kann, ist zwischen der Trägerrückseite und der Auflagefläche 7 der Formhälfte 5 eine Ausnehmung 12 vorgesehen, die - wie zuvor anhand der Fig. 4. beschrieben - mit einem Druckmedium beschickt werden kann, um den Träger gegen die Auflagefläche 8 des Vorsprungs 14 zu pressen.

Eine Fig. 5 sehr ähnliche Vorrichtung zeigt das Ausführungsbeispiel nach Fig. 6. Auch hier ist eine Spritzgußform 4 mit einer oberen Formhälfte 5 und einer unteren Formhälfte 6 zum bereichsweisen Umspritzen eines etwa C-förmig ausgebildeten Trägers 1 gezeigt, wobei die Formhälften 5 und 6 Auflageflächen 7 und 8 aufweisen. Die die Vorderseite des Trägers 1 abstützende Auflagefläche 8 bildet den späteren Blankbereich, während das unterteilte Formnest 9 die Formgebung für die Auflage 2 bestimmt. Damit der Träger 1 in eine absolut dichte Anlage an die Auflagefläche gelangt, ist auch hier eine mit einem Druckmedium beschickbare Ausnehmung 12 vorgesehen. Zum Zwecke der Entformbarkeit der fertigen Profilleiste ist die untere Formhälfte 6, wie mit der gestrichelten Linie 15 angedeutet, zweiteilig ausgebildet.

Während beim Beispiel nach Fig. 4 die Ausnehmungen 9 und 12 mit jeweils einem Längsrand aneinander angrenzen, ist bei den Ausführungsbeispielen nach Fig. 5 und 6 eine gewisse Überschneidung der Ausnehmungen 9, 12 vorgesehen.

## Patentansprüche

1. Verfahren zum Herstellen eines Kunststoff-Spritzgußteils, insbesondere Profilleiste für Fahrzeuge, bei dem zumindest auf die Vorderseite eines in das Formnest einer Spritzgußform eingelegten Trägers bereichsweise eine Kunststoff-Spritzgußmasse zwecks Bildung einer Auflage mit hohem Spritzdruck aufgespritzt wird, *dadurch gekennzeichnet*, daß beim Aufspritzen der Auflage auf die Vorderseite des Trägers der auflagefreie Trägerbereich von der Trägerrückseite her mittels eines Druckmediums gegenbeaufschlagt wird.

2. Verfahren nach Anspruch 1, *dadurch gekennzeichnet*, daß die Trägerrückseite gegenüber dem auf die Vorderseite wirkenden Spritzdruck mit Voreilung beaufschlagt wird.

3. Verfahren nach Anspruch 1 oder 2, *dadurch gekennzeichnet*, daß die Trägerrückseite mit einem Druck beaufschlagt wird, dessen Größe zumindest dem auf der Vorderseite wirkenden Spritzdruck entspricht.

4. Verfahren nach einem oder mehreren der Ansprüche 1 bis 3, *dadurch gekennzeichnet*, daß die für die Bildung der Auflage dienende Kunststoff-Spritzgußmasse auch als Gegendruckmedium verwendet wird.

5. Verfahren nach einem oder mehreren der Ansprüche 1 bis 4, *dadurch gekennzeichnet*, daß ein Träger verwendet wird, der ausschließlich in dem mit der Auflage zu versehenen Bereich eine Haftvermittlerbeschichtung aufweist.

6. Vorrichtung zum Durchführen des Verfahrens nach den Ansprüchen 1 bis 5, bestehend aus einer Kunststoff-Spritzgußmaschine mit einer Spritzgußform (4), zwischen deren Formhälften (5 und 6) der Träger (1) einspannbar ist und deren die Vorderseite des Trägers (1) abstützende Formhälfte (5) zumindest eine ein Formnest (9) für die Auflage (2) bildende Ausnehmung aufweist, *dadurch gekennzeichnet*, daß auch die die Trägerrückseite abstützende Formhälfte (6) im Trägerauflagebereich (7) mindestens eine mit einem Druckmedium beschickbare Ausnehmung (12) aufweist, die seitlich an die Ausnehmung in der anderen Formhälfte (5) angrenzt.

7. Vorrichtung nach Anspruch 6, *dadurch gekennzeichnet*, daß die Ausnehmung (12) in der die Trägerrückseite abstützenden Formhälfte (6) einen geringfügig größeren Öffnungsquerschnitt als die das Formnest (9) für die Auflage (2) bildende Ausnehmung aufweist.

8. Vorrichtung nach Anspruch 6 oder 7, *dadurch gekennzeichnet*, daß die in den Formhälften (5 und 6) eingearbeiteten Ausnehmungen (9 und 12) in zueinander versetzter Anordnung in Längsrichtung der Spritzgrußform (4) parallel zueinander verlaufen.

9. Vorrichtung nach einem oder mehreren der Ansprüche 6 bis 8, *dadurch gekennzeichnet*, daß die Ausnehmungen (9 und 12) in den einandergegenüberliegenden Formhälften (5 und 6) mit jeweils einer Randkante (13) unmittelbar aneinander angrenzen oder sich geringfügig überschneiden.

**Claims**

1. A method for the production of a synthetic plastics material injection-moulding, especially a profiled strip for vehicles, in which a synthetic plastics material injection-moulding composition is extruded at high injection pressure locally at least on to the front side of a carrier inserted into the mould nest of an injection mould, for the purpose of forming an added layer, *characterised* in that, in the extrusion of the added layer on to the front of the carrier, the carrier zone free from added layer is counter-charged from the carrier rear by means of a pressure medium.

2. A method according to Claim 1, *characterised* in that the carrier rear is loaded in advance in relation to the injection pressure acting upon the front.

3. A method according to Claim 1 or 2, *characterised* in that the carrier rear is loaded with a pressure the size of which at least corresponds to the injection pressure acting upon the front.

4. A method according to any one or more of Claims 1 to 3, *characterised* in that the synthetic plastics material injection-moulding composition serving for the formation of the added layer is also used as a counter-pressure medium.

5. A method according to any one or more of Claims 1 to 4, *characterised* in that a carrier is used which comprises an adhesion-communicating coating exclusively in the region to be provided with the added layer.

6. An apparatus for carrying out the method according to Claims 1 to 5 comprising a synthetic plastics material injection-moulding machine having an injection-mould (4), between the mould halves (5 and 6) of which the carrier (1) can be clamped and of which the mould half (5) supporting the front of the carrier (1) comprises at least one aperture forming a mould nest (9) for the added layer (2), *characterised* in that the mould half (6) supporting the carrier rear comprises, in the carrier added layer region (7), at least one aperture (12) chargeable with a pressure medium and laterally adjoining the aperture in the other mould half (5).

7. An apparatus according to Claim 6, *characterised* in that the aperture (12) in the mould half (6) which supports the carrier rear possesses a slightly larger opening cross-section than does the aperture forming the mould nest (9) for the added layer (2).

8. An apparatus according to Claim 6 or 7, *characterised* in that the apertures (9 and 12) worked into the mould halves (5 and 6) extend parallel with one another in mutually staggered arrangement in the longitudinal direction of the injection mould (4).

9. An apparatus according to any one or more of Claims 6 to 8, *characterised* in that the apertures (9 and 12) in the mutually opposite mould halves (5 and 6) directly adjoin one another or slightly overlap one another each with a marginal edge (13).

**Revendications**

1. Procédé pour la fabrication d'un élément en matière plastique moulé par injection, en particulier d'une baguette profilée pour véhicule, dans lequel une masse de matière plastique coulée par injection pour former un revêtement est appliqué par zones par injection sous haute pression au moins sur le côté avant d'un support encastré dans les cavités de moulage d'un moule d'injection, *caractérisé* en ce que lors de l'injection du revêtement sur le côté avant du support, la zone de support exempte de revêtement est contre-sollicitée du côté arrière du support au moyen d'un milieu sous pression.

2. Procédé selon la revendication 1, *caractérisé* en ce que le côté arrière du support est sollicité au préalable par rapport à la pression d'injection agissant sur le côté avant.

3. Procédé selon la revendication 1 ou 2, *caractérisé* en ce que le côté arrière du support est sollicité par une pression dont la valeur correspond au moins à la pression d'injection agissant sur le côté avant.

4. Procédé selon une ou plusieurs des revendications 1 à 3, *caractérisé* en ce que la masse de matière plastique moulée par injection servant à former le revêtement est également utilisée comme milieu de contre-pression.

5. Procédé selon une ou plusieurs des revendications 1 à 4, *caractérisé* en ce qu'un utilise un support présentant une couche d'agent adhésif exclusivement dans la zone à pourvoir du revêtement.

6. Dispositif pour l'exécution du procédé selon les revendications 1 à 5, se composant d'une machine à mouler la matière plastique par injection, avec un moule pour moulage par injection (4), entre les moitiés de moule (5 et 6) duquel le support (1) est susceptible d'être serré et dont la moitié de moule (5) supportant le côté avant du support (1) présente au moins un évidement formant une cavité de moulage (9) pour le revêtement, *caractérisé* en ce qu'également la moitié de moule (6) supportant le côté arrière de support présente dans la zone de revêtement du support (7) au moins un évidement (12) susceptible d'être exposé à un milieu sous pression, se limitant latéralement sur l'évidement situé dans l'autre moitié de moule (5).

7. Dispositif selon la revendication 6, *caractérisé* en ce que l'évidement (12) présente dans la moitié de moule (6) supportant le côté arrière de support une section transversale d'ouverture très légèrement plus grande que l'évidement formant la cavité de moulage (9) du revêtement (2).

8. Dispositif selon la revendication 6 ou 7, *caractérisé* en ce que les évidements (9 et 12) usinés dans les moitiés de moule (5 et 6) s'étendent parallèlement, en un agencement décalé l'une par rapport à l'autre en direction longitudinale du moule de moulage par injection (4).

9. Dispositif selon une ou plusieurs des revendications 6 à 8, *caractérisé* en ce que, dans les moitiés de moule (5 et 6) situées l'une en face de l'autre, les évidements (9 et 12) sont chaque fois directement adjacents l'un à l'autre avec une arête de bord (13) ou bien se chevauchent légèrement.

Fig. 2

Fig. 1

Fig.3

Fig. 4

Fig. 5

Fig. 6